(19) Europäisches Patentamt / European Patent Office / Office européen des brevets

(11) EP 2 249 458 B1

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(51) Int Cl.:
**H05B 33/08** (2006.01)  **H02J 9/06** (2006.01)
**H02J 9/02** (2006.01)

(21) Anmeldenummer: **10168858.8**

(22) Anmeldetag: **11.04.2007**

(54) **Notlichtgerät zum Betreiben einer Lichtquelle, insbesondere einer LED**

Emergency lighting apparatus for driving a light source, especially an LED

Appareil d'éclairage de secours pour commander une source lumineuse, en particulier une DEL

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.04.2006 DE 102006018531**
**03.07.2006 DE 102006030655**

(43) Veröffentlichungstag der Anmeldung:
**10.11.2010 Patentblatt 2010/45**

(62) Dokumentnummer(n) der früheren Anmeldung(en) nach Art. 76 EPÜ:
**07724164.4 / 2 013 959**

(73) Patentinhaber: **Tridonic GmbH & Co KG**
**6851 Dornbirn (AT)**

(72) Erfinder:
• **Rohner, Daniel**
**1220 Wien (AT)**
• **Mair, Alexander**
**1220 Wien (AT)**

(74) Vertreter: **Rupp, Christian et al**
**Mitscherlich & Partner**
**Patent- und Rechtsanwälte**
**Sonnenstraße 33**
**80331 München (DE)**

(56) Entgegenhaltungen:
**US-A1- 2006 001 381    US-B1- 6 502 044**
**US-B1- 7 015 654**

• **BASSO C: "CRITICAL-MODE CONTROL STABILIZES SWITCH-MODE POWER SUPPLIES" EDN ELECTRICAL DESIGN NEWS, REED BUSINESS INFORMATION, HIGHLANDS RANCH, CO, US, Bd. 43, Nr. 9, 23. April 1998 (1998-04-23), Seiten 171-174,176,1, XP000832542 ISSN: 0012-7515**
• **RICO-SECADES M ET AL: "Evaluation of a low cost permanent emergency lighting system based on high efficiency LEDs" CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US LNKD, Bd. 1, 12. Oktober 2003 (2003-10-12), Seiten 542-546, XP010676072 ISBN: 978-0-7803-7883-4**

**Beschreibung**

Die vorliegende Erfindung betrifft ein Notlichtgerät gemäß dem Oberbegriff des Anspruchs 1, welches zum Betreiben einer Lichtquelle, insbesondere einer LED vorgesehen ist.

Notlichtgeräte sind unerlässlich, um in größeren Gebäuden oder Komplexen Beleuchtungssysteme zu realisieren, welche auch im Falle des Ausfalls der allgemeinen Netzversorgung eine ausreichende Beleuchtung zur Verfügung stellen. Nur dann, wenn im Falle des Ausfalls der Stromversorgung oder anderen Notfällen bestimmte relevante Räumlichkeiten oder Bereiche nach wie vor ausgeleuchtet werden, können Evakuierungs- oder Hilfsmaßnahmen sicher durchgeführt werden. Dementsprechend werden derartige Notlichtgeräte insbesondere zum Ausleuchten von Fluchtwegen und dergleichen eingesetzt.

Notlichtgeräte der gattungsgemäßen Art weisen dementsprechend als zentrales Element eine Energiespeichereinheit, insbesondere eine Batterie bzw. einen Akkumulator auf, welche während eines Normal- bzw. Ladebetriebs durch die allgemeine Netzversorgungsspannung aufgeladen wird. Hierzu ist eine Ladeschaltung vorgesehen, welche eingangsseitig mit der Netzversorgungsspannung verbunden ist und während des Ladebetriebs der Energiespeichereinheit permanent Energie zuführt, welche diese speichert. Erst im Falle des Auftretens eines Notzustands, der von derartigen Geräten durch eine Überwachung der Netzversorgungsspannung üblicherweise selbständig erkannt wird, wird in einen Notlichtbetrieb gewechselt, in dem die Lichtquelle aktiviert und betrieben wird, wozu - sofern erforderlich - die von der Energiespeichereinheit zur Verfügung gestellte Energie genutzt wird. Da die Speicherkapazität der Energiespeichereinheit selbstverständlich begrenzt ist, werden vorzugsweise Lichtquellen eingesetzt, welche verhältnismäßig wenig Energie verbrauchen. Dementsprechend werden derartige Notlichtgeräte bevorzugt mit Gasentladungslampen, insbesondere Leuchtstoffröhren ausgestattet. Zunehmend finden allerdings auch Lichtquellen in Form von lichtemittierenden Halbleitern, insbesondere LEDs Verwendung, da auch diese Lichtquellen einen hohen Wirkungsgrad aufweisen und dementsprechend energiesparend eingesetzt werden können.

Die Überwachung der Netzversorgungsspannung, welche also vorgenommen wird, um rechtzeitig einen Notlichtbetrieb veranlassen zu können, erfolgt üblicherweise durch eine Steuereinheit, welche ihr zugeführte Signale auswertet und anhand dieser Signale den Zustand der Netzversorgungsspannung beurteilt. Bei bekannten Schaltungen wird hierzu in naheliegender Weise die Netzversorgungsspannung selbst gemessen. Hieraus ergibt sich dann allerdings das Problem, dass die Sensorik zum Ermitteln des Zustands der Netzversorgungsspannung auf Netzpotential liegt und von den übrigen Schaltungsbereichen des Notlichtgeräts, welche auf dem Spannungsniveau der Energiespeichereinheit oder LED liegen, galvanisch getrennt werden muss. Die hierzu erforderliche Potentialtrennung ist nicht nur teuer, sondern beansprucht darüber hinaus auch verhältnismäßig viel Platz in dem Notlichtgerät.

Das Dokument 6,502,044 B1 beschreibt ein elektronisches Selbstdiagnosesystem für Notfallleuchten. Das Selbstdiagnosesystem überprüft die Schaltkreise, das Netzteil, das Ladegerät, und die Bestückung von Notfallleuchten entweder auf eine manuelle oder automatische Auslösung hin. Die Prüffunktionen werden durch die Verwendung eines programmierbaren Mikroprozessors bereitgestellt, wobei eine Diagnoseschaltung nicht nur den Betrieb des Ladegeräts überwacht, sondern auch das Ladegerät steuert, um alternative Vorgehensweisen für die Behebung eines Fehlers zu ermöglichen. Im Notlichtbetrieb wird ein mikroprozessorgesteuerter zweistufiger Wechselrichter nicht nur zum Betrieb einer LED-Lichtquelle verwendet, sondern auch zur Leistungsversorgung des Mikroprozessors. Die Leistungsversorgung des Mikroprozessors wird durch den Mikroprozessor selbst gesteuert und kann dadurch eingestellt werden, bis der Netzstrom wieder hergestellt ist, wodurch die Leistungsaufnahme auf null reduziert wird.

Das Dokument "Critical-Mode Control Stabilizes Switch-Mode Power Supplies" von Basso (EDN, 23. Apri 1998, Seite 171 ff.) zeigt ein Beispiel für eine Leistungsfaktorkorrekturschaltung anhand eines Schaltrichters IC MC33364. Die Leistungsfaktorkorrekturschaltung arbeitet im sog. critical conduction mode (auch borderline mode genannt). In dieser Betriebsart kann durch die Nulldurchgangserkennung (zero cross detection) der maximal aufgenommene Eingangsstrom begrenzt werden. Während der Einschaltphase des Schalters entspricht dann der durch den Shunt fließende Strom dem aufgenommenen Eingangsstrom. Die Messung an einem Optokoppler, die auf der Sekundärseite der Schaltung erfolgt, dient nur zur Erfassung der Ausgangsspannung und zwar um die Amplitude der Ausgangsspannung möglichst konstant zu halten und danach die Regelung anzupassen. Die Ausgangsspannung bei der Leistungsfaktorkorrekturschaltung wird nur zum Zweck der Stabilisierung der Ausgangsspannung erfasst, es erfolgt jedoch kein Rückschluss auf die Eingangsspannung oder anderer Größen.

Das Dokument "Evaluation of a low-cost permanent emergency lighting system based on high efficiency LEDs" von Rico-Secades u.a. (38th IEEE Industry Applications Conference, conference record of the IEEE Industry Applications Conference IAS annual meeting, 12.-16. Oktober 2003) beschreibt eine Steuerschaltung für den Notlichtbetrieb, welche einen Notzustand erkennen kann. Die Steuerschaltung ist nicht mit der Ladeschaltung verbunden. Die Ansteuerung der Ladeschaltung erfolgt daher unabhängig von der Ansteuerung der Steuerschaltung für den Notlichtbetrieb.

Das Dokument US 2006/0001381 A1 beschreibt eine Ansteuer- und Steueranordnung zum Liefern eines gewünschten Schaltstroms an eine Last mit einer Kette aus einer oder mehreren elektronischen Anordnungen, wobei die genannte Anordnung aufweist: Einen Spannungsumwandler, der zur Verbindung mit einer Stromversorgung vorgesehen ist, wobei der genannte Spannungsumwandler zum Umwandeln von Spannung von der Spannungsversorgung von einer Spannung erster Größe in eine Spannung zweiter Größe vorgesehen ist, wobei der genannte Spannungswandler auf ein Steuersignal reagiert; eine Abblendsteueranordnung, die zum Empfang der genannten Spannung weiter Größe und zum Steuern der Übertragung der Spannung zweiter Größe zu der genannten Kette vorgesehen ist, wodurch die Aktivierung der genannten Kette gesteuert wird; eine Spannungsfühlanordnung, die mit dem Ausgang des genannten Spannungsumwandler elektrisch verbunden ist und die zum Erzeugen eines ersten Signals vorgesehen ist und eine Spannungsfühlanordnung in Reihe mit der genannten Kette zum Erzeugen eines zweiten Signals, das ein Anzeichen für den durch die genannte Kette fließenden Strom ist und; eine Rückkopplungsanordnung, die mit dem genannten Spannungsumwandler, der genannten Spannungsfühlanordnung und der genannten Stromfühlanordnung elektrisch gekoppelt ist. Die Rückkopplungsanordnung ist dazu vorgesehen, das gesamte erste und zweite Signal zu empfangen und dem Spannungsumwandler das Steuersignal zu liefern, wobei das genannte Steuersignal auf dem ersten und zweiten Signal basiert. Der Spannungswandler ändert auf Basis des von der Rückkopplungsanordnung empfangenen Steuersignals die Spannung zweiter Größe. Die Abblendsteueranordnung ist dazu vorgesehen, ein Schaltsignal zu empfangen und in Reaktion auf das Schaltsignal die Übertragung zweiter Größe zu genannten Kette steuert. Die Rückkopplungsanordnung weist weiterhin einen Rückkopplungsschalter auf, der auf ein Tastverhältnissteuersignal reagiert, wobei die genannte Rückkopplungsanordnung dazu vorgesehen ist, das Steuersignal zu erzeugen und zwar auf Basis primär des ersten Signals, wenn der genannte Rückkopplungsschalter sich in einem aktiven Zustand befindet, und wobei die genannte Rückkopplungsanordnung dazu vorgesehen ist, das Steuersignal zu erzeugen und zwar primär auf Basis des zweiten Signals, wenn der genannte Rückkopplungsschalter sich in einem deaktivierten Zustand befindet.

Das Dokument US 7,015,654 B1 beschreibt einen Mikrocontroller und eine Boost-Konverterschaltung die einen konstanten Strom zu einer LED-Anordnung übertragen. Der Mikrocontroller ist mit einem Halbleiterschalter verbunden und die Boost-Konverterschaltung misst die Fähigkeit einer Gleichstromleistungsversorgung einen Induktor zu verändern. Die Arbeitszyklen des Halbleiterschalters werden gemäß der Messung verändert, um die LED-Anordnung mit einem wesentlichen konstanten Strom durch den Induktor zu versorgen unabhängig von der momentanen Batteriespannung.

Der vorliegenden Erfindung liegt nunmehr die Aufgabe zugrunde, ein verbessertes Konzept für ein Notlichtgerät anzugeben, bei dem die vorstehend beschriebenen Nachteile vermieden sind.

Diese Aufgabe wird durch ein Notlichtgerät mit den Merkmalen des Anspruchs 1 gelöst. Vorteilhafte Weiterbildungen der Erfindung sind Gegenstand der Unteransprüche.

Kerngedanke der vorliegenden Erfindung ist, dass im Gegensatz zu bekannten Lösungen die Netzversorgungsspannung nunmehr lediglich indirekt überwacht wird, um gegebenenfalls einen Notlichtbetrieb zu veranlassen. Hierzu werden lediglich Messwerte auf dem Potential der Energiespeichereinheit oder LED erfasst und auf Basis dieser Messwerte mit Hilfe von weiteren Informationen auf den Zustand der Netzversorgungsspannung zurück geschlossen.

Erfindungsgemäß wird dementsprechend ein Notlichtgerät zum Betreiben einer Lichtquelle, insbesondere einer LED vorgeschlagen, wobei das Notlichtgerät aufweist:

- eine Energiespeichereinheit,

- eine mit einer Netzversorgungsspannung zu versorgende Ladeschaltung zum Laden der Energiespeichereinheit während eines Ladebetriebs des Notlichtgeräts, wobei die Ladeschaltung eine Potentialtrennung aufweist, sowie

- eine während eines Notlichtbetriebs durch die Energiespeichereinheit versorgte Treiberschaltung zum Betreiben der Lichtquelle,

wobei das Gerät ferner eine Steuereinheit aufweist, welche dazu ausgebildet ist, während des Ladebetriebs den Zustand der Netzversorgungsspannung zu überwachen und bei Erkennen eines Notzustands den Notlichtbetrieb zu aktivieren. Hierbei ist erfindungsgemäß vorgesehen, dass die Steuereinheit den Zustand der Netzversorgungsspannung anhand von auf der Ausgangsseite der Ladeschaltung gemessenen Betriebsgrößen des Notlichtgeräts ermittelt.

Durch die erfindungsgemäßen Maßnahmen ist sichergestellt, dass ein sich auf die Spannungsversorgung auswirkender Notzustand nach wie vor zuverlässig erkannt werden und dementsprechend ein Notlichtbetrieb eingeleitet werden kann. Gleichzeitig aber entfällt die erforderliche galvanische Trennung zwischen den Mitteln zur Überwachung der Netzversorgungsspannung und den weiteren Komponenten des Notlichtgeräts, so dass das Gerät insgesamt gesehen kostengünstiger und kompakter realisiert werden kann.

Vorzugsweise weist die Ladeschaltung einen steuerbaren Schalter sowie einen Transformator auf, wobei die Ladeschaltung insbesondere durch einen sogenannten Flyback-Konverter gebildet sein kann. Der steuerbare Schalter wird durch die Steuereinheit des Notlichtgeräts angesteuert, wobei hier die Ansteuerung insbesondere über einen Optokoppler erfolgen kann.

Der Zustand der Netzversorgungsspannung wird nunmehr insbesondere unter Berücksichtigung des von der Steuereinheit gewählten Duty-Cycles zur Ansteuerung des Schalters des Flyback-Konverters bzw. der Ladeschaltung ermittelt. Ferner wird hierzu die Sekundärspannung des Flyback-Konverters bzw. bei anderen Schaltnetzteil-Topologien die Ladeleistung für die Energiespeichereinheit berücksichtigt. Diese Ladeleistung kann während des Ladebetriebs, also bei ausgeschalteter Lichtquelle, in einfacher Weise durch die Steuereinheit ermittelt werden kann, da die hierzu zu messenden Werte, nämlich Spannung und Strom der Energiespeicherschaltung sich auf das gleiche Basispotential beziehen, auf dem auch die weiteren Komponenten des Notlichtgeräts liegen. Gleiches gilt auch für die im Falle der Verwendung des Flyback-Konverters zu messende Sekundärspannung. In beiden Fällen kann also die beim Stand der Technik erforderliche galvanische Trennung zwischen den Messeinrichtungen und der Steuereinheit entfallen.

Eine andere vorteilhafte Weiterbildung der vorliegenden Erfindung bezieht sich auf die Maßnahmen zum Betreiben der Lichtquelle, insbesondere der LED während des Notlichtbetriebs. Hierzu ist die Treiberschaltung vorzugsweise als Schaltregler ausgebildet und weist dementsprechend einen weiteren steuerbaren Schalter auf, welcher wiederum durch die Steuereinheit angesteuert wird. Die Ansteuerung der Schalters ist dabei derart, dass die Lichtquelle unabhängig vom Ladezustand der Energiespeichereinheit mit einer konstanten Leistung oder konstantem Strom betrieben werden kann. Diese Maßnahme ist von besonderer Bedeutung, da die Leistung der Energiespeichereinheit selbstverständlich im Laufe der Zeit sinkt, was sich allerdings nicht auf die Lichtintensität des Notlichtgeräts auswirken sollte.

Im Falle der Nutzung einer LED als Lichtquelle wäre es dementsprechend wiederum naheliegend, den Diodenstrom selbst, der die Lichtleistung bestimmt, zu erfassen, um die angestrebte Leistungsregelung zu ermöglichen. Gemäß einer besonders vorteilhaften Weiterbildung der vorliegenden Erfindung ist allerdings vorgesehen, dass die Messung des Diodenstroms entfällt und stattdessen der Strom bzw. die Leistung der Lichtquelle anhand anderer Parameter indirekt gemessen bzw. abgeschätzt wird. Insbesondere wird vorzugsweise lediglich die an der Lichtquelle anliegende Spannung ermittelt und dann der Diodenstrom aus weiteren Informationen abgeleitet, wobei hierbei insbesondere die Verlustleistung der Treiberschaltung berücksichtigt wird. Mittels zuvor bestimmter und in der Steuereinheit hinterlegter Abgleichtabellen kann dann ohne eine direkte Messung des Diodenstroms die Leistung der Lichtquelle bestimmt werden, so dass eine nahezu konstante Lichtleistung durch die Steuereinheit eingestellt werden kann. Die Regelung der Lichtleistung erfolgt hierbei insbesondere durch eine entsprechende Taktung des steuerbaren Schalters der Treiberschaltung, da auf diesem Wege in sehr einfacher und eleganter Weise die Leistung, mit der die Lichtquelle betrieben wird, eingestellt werden kann.

Diese besondere Maßnahme zum Betreiben der Lichtquelle bei einer nahezu konstanten Leistung, wobei auf eine direkte Messung des Stroms verzichtet wird, kann im Übrigen auch unabhängig von dem eingangs beschriebenen erfindungsgemäßen Gedanken der indirekten Überwachung der Netzversorgung genutzt werden. Dementsprechend ist dieser Gedanke auch Gegenstand eines weiteren unabhängigen Anspruchs.

Nachfolgend soll die Erfindung anhand der beiliegenden Zeichnung näher erläutert werden. Es zeigen:

Fig. 1 schematisch das Schaltbild eines Ausführungsbeispiels eines erfindungsgemäßen Notlichtgeräts;

Fig. 2 ein Beispiel eines Notlichtgeräts;

Fig. 3 eine Grafik zur Ermittlung der Netzversorgungsspannung auf Basis von an der Ausgangsseite der Ladeschaltung gemessenen Betriebsparametern und

Fig. 4 eine weitere Grafik zur Ermittlung der Sekundärleistung der Ladeschaltung, welche zur indirekten Bestimmung der Lichtquellenleistung berücksichtigt wird.

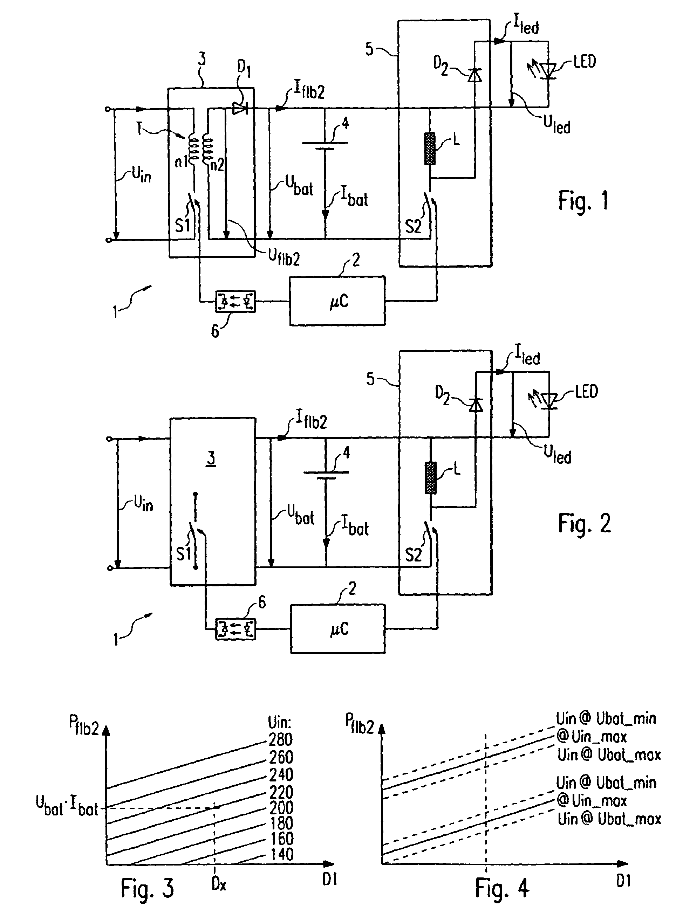

Das in Fig. 1 in vereinfachter Weise dargestellte und allgemein mit dem Bezugszeichen 1 versehene erfindungsgemäße Notlichtgerät ist im dargestellten Ausführungsbeispiel zum Betreiben einer LED als Notlichtquelle vorgesehen. Das Notlichtgerät 1 ist eingangsseitig an ein Stromversorgungsnetz angeschlossen, welches eine Netzversorgungsspannung $U_{in}$ zur Verfügung stellt, und weist als wesentliche Komponenten eine Steuereinheit 2, eine Ladeschaltung 3, eine Energiespeichereinheit 4 in Form einer Batterie bzw. eines Akkumulators sowie eine Treiberschaltung 5 auf. Die Ladeschaltung 3 ist im dargestellten Ausführungsbeispiel durch einen sog. Flyback-Konverter gebildet, der einerseits einen Transformator T mit einer Primärwicklung n1 und einer Sekundärwicklung n2 sowie andererseits einen steuerbaren Schalter S1 aufweist. In bekannter Weise kann durch ein entsprechendes abwechselndes Öffnen und Schließen des Schalter S1 die von der Netzversorgungsspannung $U_{in}$ zur Verfügung gestellte Energie auf die Sekundärseite des Flyback-Konverters 3 übertragen und zum Aufladen der Energiespeichereinheit 4 genutzt werden. Die Energieübertragung findet dabei im geöffneten Zustand des Schalters S1 statt, wobei hierzu auf der Ausgangsseite des Flyback-Konverters 3 ferner eine Diode $D_1$ vorgesehen ist. Derartige Flyback-Schaltungen finden aufgrund ihres einfachen Aufbaus und ihrer zuverlässigen Funktion in derartigen Notlichtgeräten vielfach Verwendung.

Die Ansteuerung des steuerbaren Schalters S1 erfolgt durch die Steuereinheit 2 des Notlichtgeräts, wobei die Ansteuerung insbesondere galvanisch getrennt über einen Optokoppler 6 erfolgt. Die Steuereinheit 2 steuert hierbei den Schalter S1 alternierend an, wobei sich der sog. Duty-Cycle D1 für den Schaltbetrieb des Schalters S1 wie folgt berechnet:

$$D1 = t_{on1}/(T - t_{on1})$$

$t_{on1}$ entspricht hierbei der Einschaltzeit des Schalters, während T die Gesamtdauer eines vollständigen Schaltzyklus für den Schalter S1 bezeichnet.

Denkbar ist auch, dass es sich bei der Ansteuerung von S1 um einen 'Freischwinger' handelt und über den Duty-cycle vom Optokoppler 6 die Eigenfrequenz des 'Freischwinger' beeinflusst wird.

Während eines Ladebetriebs des Notlichtgeräts 1 ist üblicherweise ausschließlich die Ladeschaltung 3 aktiv, um die Batterie 4 dauerhaft aufzuladen. Erst für den Fall, dass ein Notzustand vorliegt, der insbesondere durch Abweichungen in der Netzversorgungsspannung $U_{in}$ von vorbestimmten Soll-Werten gekennzeichnet ist, wird ein Notlichtbetrieb eingeleitet, in dem die Treiberschaltung 5 dazu genutzt wird, die LED anzusteuern. Die als Schaltregler ausgebildete Treiberschaltung 5 weist hierzu einen weiteren steuerbaren Schalter S2, eine Induktivität L sowie eine Diode $D_2$ auf. Durch alternierendes Ansteuern des Schalters S2 durch die Steuereinheit 2 wird auf diese Weise der LED ein Strom zur Verfügung gestellt, über welchen diese betrieben wird. Das Tastverhältnis, mit dem der Schalter S2 durch die Steuereinheit 2 angesteuert wird, kann dabei variiert werden, um die Höhe des der LED zugeführten Stroms und damit die Leistung, bei welcher die LED betrieben wird, einzustellen. Auf diese Weise kann in sehr eleganter weise sichergestellt werden, dass auch bei schwankender Batterieleistung die LED trotz allem mit gleichbleibender Helligkeit betrieben wird.

Eine erste wesentliche Funktion des Notlichtgeräts 1 besteht also darin, durch Beurteilung der Netzversorgungsspannung $U_{in}$ zu erkennen, ob ein Notzustand vorliegt, um ggf. einen Notlichtbetrieb zu veranlassen. Bislang war es bekannt, hierzu unmittelbar den Wert der Eingangsspannung $U_{in}$ für die Ladeschaltung 3 zu bestimmen, was allerdings aus den zuvor genannten Gründen mit Nachteilen verbunden ist.

Gemäß der vorliegenden Erfindung wird deshalb nunmehr auf eine direkte Messung der Netzversorgungsspannung $U_{in}$ verzichtet. Stattdessen ist vorgesehen, diese auf indirektem Wege zu ermitteln. Insbesondere ist vorgesehen, das lediglich Größen von Betriebsparametern des Notlichtgeräts 1 auf der Sekundärseite der Ladeschaltung 3 gemessen werden.

Bei dem Ausführungsbeispiel gemäß Fig. 1 wird hierzu die auf der Sekundärseite des Sperrwandlers bzw. Flyback-Konverters 3 anliegende Spannung $U_{flb2}$ gemessen, wozu insbesondere keine galvanische Trennung erforderlich ist, da diese Größe auf dem gleichen Bezugspotential liegt, wie die Steuereinheit 2, welchen den Messwert auswertet. Ist nun die Höhe dieser Sekundärspannung $U_{flb2}$ bekannt, so kann ausgehend hiervon auf die Höhe der Eingangsspannung $U_{in}$ zurückgeschlossen werden. Bei eingeschaltetem Schalter S1 des Flyback-Konverters 3 besteht nämlich ein Zusammenhang zwischen Eingangsspannung $U_{in}$ und Sekundärspannung $U_{flb2}$, der insbesondere von dem Wicklungsverhältnis zwischen den beiden Wicklungen n1 und n2 des Transformators T sowie von dem Duty-Cycle des Schalters S1 abhängig ist. Dieser Zusammenhang zwischen der einfach zu messenden Sekundärspannung $U_{flb2}$ und der zu überwachenden Eingangsspannung $U_{in}$ ist nunmehr in Form einer Wertetabelle in der Steuereinheit 2 hinterlegt, so dass diese nach Messung der Sekundärspannung $U_{flb2}$ in einfacher Weise die Höhe der Eingangsspannung $U_{in}$ bestimmen kann, ohne diese direkt messen zu müssen. Stellt nun die Steuereinheit 2 fest, dass die ermittelte Eingangsspannung $U_{in}$ außerhalb bestimmter Sollwert-Bereiche liegt, so deutet dies auf einen Notzustand hin, was die Steuereinheit 2 wiederum dazu veranlassen wird, einen Notbetrieb einzuleiten.

Die beschriebene Lösung ermöglicht also eine sehr einfache aber effektive Überwachung des Zustands der allgemeinen Stromversorgung. Ferner besteht ein besonderer Vorteil des in Fig. 1 dargestellten Ausführungsbeispiels darin, dass die Höhe der Eingangsspannung $U_{in}$ unabhängig davon bestimmt werden kann, ob die Notlicht-LED eingeschaltet ist oder nicht. Die Diode $D_1$ bewirkt nämlich durch ihre Sperrwirkung eine Trennung zwischen Sekundärspannung $U_{flb2}$ und Batteriespannung $U_{Bat}$, so dass sich die Tätigkeit der Treiberschaltung 3 nicht auf den vorbeschriebenen Vorgang der Bestimmung der Eingangsspannung $U_{in}$ auswirkt.

Ein etwas allgemeineres Beispiel eines Notlichtgeräts ist in Fig. 2 dargestellt. Dieses entspricht in seinem Aufbau im Wesentlichen dem in Fig. 1 gezeigten Notlichtgerät 1, allerdings ist nunmehr die Ladeschaltung 3 nicht durch einen Flyback-Konverter sondern generell durch eine Schaltungsanordnung gebildet, welche eine Potentialtrennung sowie einen wiederum durch die Steuereinheit 2 angesteuerten Schalter S1 aufweist.

Bei dieser allgemeineren Form besteht nicht zwangläufig ein bekannter Zusammenhang zwischen der Eingangsspannung $U_{in}$ und der Spannung auf der Ausgangsseite der Ladeschaltung 3. Dennoch kann auch hier die Höhe der Eingangsspannung $U_{in}$ auf indirektem Wege bestimmt werden, wobei hierzu nunmehr allerdings andere Betriebsgrößen gemessen werden.

Es handelt sich hierbei einerseits um die Batteriespannung $U_{bat}$ sowie andererseits um den Batteriestrom $I_{bat}$. Beide Größen können wiederum verhältnismäßig einfach, also ohne galvanische Trennung bestimmt werden, da sie wiederum ebenso wie die Steuereinheit 2, welche diese Messgrößen auswertet, auf dem gleichen Bezugspotential liegen.

Auf Basis dieser beiden Messgrößen $U_{bat}$ und $I_{bat}$ sowie des bekannten Duty-Cycles D1 für den Schalter S1 der Ladeschaltung 3 kann dann die Eingangsspannung $U_{in}$ bestimmt werden, da diese mit den drei bekannten Größen in einer Beziehung steht. Dies verdeutlicht die Grafik von Fig. 3, welche unterschiedliche Kennlinien der Sekundärleistung $P_{flb2}$ der Ladeschaltung 3 in Abhängigkeit von dem Duty-Cycle D1 für den Schalter S1 zeigt. Diese Kennlinien werden beispielsweise bei der Herstellung des Notlichtgeräts ermittelt und wiederum in Form einer Tabelle in der Steuereinheit 2 hinterlegt. Es ist erkennbar, dass diese Kennlinien insbesondere auch von der Eingangsspannung $U_{in}$ abhängig sind. Sind nunmehr also der Duty-Cycle D1 sowie die Sekundärleistung $P_{flb2}$ der Ladeschaltung 3 bekannt, so kann ebenso wie bei dem Beispiel von Fig. 1 auf die Höhe der Eingangsspannung $U_{in}$ zurück geschlossen werden.

Im dargestellten Beispiel von Fig. 3 wird also ermittelt, mit welcher Kennlinie die bekannte Kombination aus Duty-Cycle D1 und Sekundärleistung $P_{flb2}$ der Ladeschaltung 3, welche bei deaktivierter Treiberschaltung 5 dem Produkt aus Batteriespannung $U_{bat}$ und Batteriestrom $I_{bat}$ entspricht, übereinstimmt. Bei den dargestellten Messwerten beispielsweise liegt dieser Wert auf der Kennlinie für eine Eingangsspannung $U_{in}$ von 220 Volt, was einem ordnungsgemäßen Zustand der allgemeinen Netzversorgung entspricht. Würde allerdings der ermittelte Wert auf einer Kennlinie liegen, die beispielsweise einer Eingangsspannung $U_{in}$ von 140 Volt oder 280 Volt entspricht, so würde dies die Steuereinheit 2 wiederum dahingehend interpretieren, dass ein Fehler in der Netzversorgung vorliegt und dementsprechend einen Notzustand einleiten.

In beiden gezeigten Beispielen kann also zuverlässig und ohne das Erfordernis einer direkten Messung der Eingangsspannung $U_{in}$ festgestellt werden, ob die Netzversorgung in Ordnung ist oder nicht. Eine Einschränkung bei dem Beispiel von Fig. 2 besteht allerdings darin, dass die beschriebene Bestimmung der Eingangsspannung $U_{in}$ nur im ausgeschalteten Zustand der Treiberschaltung 5 möglich ist. Bei dem Beispiel von Fig. 1 hingegen besteht diese Einschränkung - wie bereits erwähnt - nicht. Grundsätzlich allerdings wird die Steuereinheit 2 im Falle des Erkennens eines Fehlers eine Aktivierung der Treiberschaltung 5 und dementsprechend ein Einschalten der LED veranlassen.

Nach Aktivieren der Treiberschaltung 5 kann dann in der zuvor beschriebenen Weise der Schalter S2 hochfrequent angesteuert werden, um die LED mit einer gewünschten Leistung zu betreiben. Um in diesem Fall sicherzustellen, dass die Leistung der LED konstant ist, wäre es erforderlich, sowohl die LED-Spannung $U_{led}$ als auch den LED-Strom $I_{led}$ zu kennen, um eine Regelung zu ermöglichen. Gemäß einer besonderes vorteilhaften Weiterbildung wird allerdings lediglich die LED-Spannung $U_{led}$ gemessen und der Strom $I_{led}$ bzw. die sich damit ergebende Leistung $P_{led}$ durch die Steuereinheit 2 indirekt ermittelt, was nachfolgend näher erläutert werden soll.

Um den Diodenstrom $I_{led}$ indirekt bestimmen zu können, werden nunmehr zumindest die Größen Batteriespannung $U_{bat}$, Batteriestrom $I_{bat}$ und - Falle des Beispiels von Fig. 1 - Sekundärspannung $U_{flb2}$ sowie zusätzlich die LED-Spannung $U_{led}$ gemessen. Hieraus können dann die weiteren Informationen, welche zur Regelung des LED-Stroms $I_{lea}$ benötigt werden, berechnet werden, wozu allerdings noch weitere Informationen erforderlich sind, welche nicht durch Istwert-Messungen erfasst werden, sondern als Wertetabellen in der Steuereinheit 2 hinterlegt sind.

Die erste Wertetabelle ist die bereits oben erwähnte Information hinsichtlich des Zusammenhangs zwischen Duty-Cycle D1, Sekundärspannung $U_{flb2}$ und Eingangsspannung $U_{in}$ bei dem Beispiels von Fig. 1 bzw. zwischen Duty-Cycle D1, Batteriespannung $U_{bat}$, Batteriestrom $I_{bat}$ und Eingangsspannung $U_{in}$ bei dem allgemeineren Beispiel von Fig. 2. Ferner muss zum Ermitteln des Diodenstroms auch die Verlustleistung $P_{lost}$ der Treiberschaltung 5 bekannt sein, welche von der Differenz zwischen der gemessenen LED-Spannung $U_{led}$ und der ebenfalls gemessenen Batteriespannung $U_{bat}$ abhängig ist, so dass gilt:

$$P_{lost} = f\left(U_{led} - U_{bat}\right)$$

Die dritte benötigte Information schließlich ist die im Falle einer aktivierten Treiberschaltung vorliegende Sekundärleistung $P_{flb2}$ der Ladeschaltung 3, welche eine Funktion des Duty-Cycles D1, der Eingangsspannung $U_{in}$ sowie der Batteriespannung $U_{bat}$ ist. Der Zusammenhang zwischen diesen Größen ist in Fig. 4 dargestellt, wobei erkennbar ist, dass die Sekundärleistung $P_{flb2}$ der Ladeschaltung 3 primär von der Eingangsspannung $U_{in}$ und dem Duty-Cycle D1 für den Schalter S1 abhängig ist, darüber hinaus allerdings auch noch auf Grund der Batteriespannung $U_{bat}$ variieren kann.

Ist nun aufgrund der zuvor beschriebenen Maßnahmen die Eingangsspannung $U_{in}$ (ggf. bei dem Beispiel von Fig. 2 zunächst bei abgeschalteter Treiberschaltung 5) ermittelt worden, so kann anhand des Zusammenhangs in Fig. 4 auch bei aktivierter Treiberschaltung 5 die Sekundärleistung $P_{flb2}$ der Ladeschaltung 3 ermittelt werden. Bekannt sind dann also die gemessenen Größen Batteriespannung $U_{bat}$, Batteriestrom $I_{bat}$, ggf. Sekundärspannung $U_{flb2}$ und LED-Spannung $U_{led}$, der durch die Steuereinheit vorgegebene Duty-Cycle D1 für den Schalter S1, sowie die anhand der hinterlegten Wertetabellen bestimmten weiteren Größen Eingangsspannung $U_{in}$, Sekundärleistung $P_{flb2}$ der Ladeschaltung 3 sowie Verlustleistung $P_{lost}$ der Treiberschaltung 5.

Die Kenntnis dieser Größen wiederum ermöglicht gemäß dem folgenden Zusammenhang zunächst die Bestimmung des Stroms $I_{flb2}$ auf der Sekundärseite der Ladeschaltung 3:

$$I_{Jlb2} = P_{Jlb2} / U_{bat}$$

Schließlich können auch der LED-Strom $I_{led}$ und die LED-Leistung $P_{led}$ nach folgenden Gleichungen berechnet werden:

$$I_{led} = \left(P_{Jlb2} - U_{bat} \cdot I_{bat} - P_{lost}\right) / U_{led}$$

$$P_{led} = P_{Jlb2} - U_{bat} \cdot I_{bat} - P_{lost}$$

Beide Gleichungen gelten für den Fall, dass die Ladeschaltung 3 nach wie vor aktiv ist, also zumindest noch eine gewisse Stromversorgung zur Verfügung steht. Dies kann beispielsweise der Fall sein, wenn ein Notlichtbetrieb anderweitig veranlasst wurde. Für den Fall hingegen, dass die Stromversorgung vollständig ausfällt und der Notlichtbetrieb ausschließlich durch die Batterie aufrechterhalten wird, gelten die vereinfachten Gleichungen:

$$I_{led} = \left(U_{bat} \cdot I_{bat} - P_{lost}\right) / U_{led}$$

$$P_{led} = U_{bat} \cdot I_{bat} - P_{lost}$$

Letztendlich können also der aktuelle Ist-Wert des LED-Stroms $I_{led}$ sowie die aktuelle Leistung $P_{led}$ auf indirektem Wege ermittelt und zur Regelung genutzt werden. Die entsprechenden Berechnungen werden durch die Steuereinheit 2 durchgeführt.

Der Vorteil dieser indirekten Bestimmungen der zur Regelung erforderlichen Istwerte besteht darin, dass auf eine Messung eines zusätzlichen Betriebsparameters des Notlichtgeräts verzichtet werden kann, was wiederum zu einer weiteren Vereinfachung des Geräts insgesamt führt. Da hierbei ohnehin zum Teil auf bereits zur Bestimmung der Eingangsspannung ermittelte bzw. gemessene Parameter zurückgegriffen werden kann, stellt diese indirekte Bestimmung des LED-Stroms also eine besonders vorteilhafte Weiterbildung des eingangs beschriebenen Gedankens der indirekten Bestimmung der Eingangspannung dar. Allerdings könnte eine entsprechende indirekte Strom- und Leistungsbestimmung für die Lichtquelle auch bei anderen Geräten zum Einsatz kommen, bei denen der erste erfindungsgemäße Gedanke nicht verwirklicht ist. Beispielsweise ist diese Vorgehensweise u.a. bei Notlichtgeräten sinnvoll, bei denen ein Notzustand alternativ oder ergänzend zur Überwachung der Stromversorgung auch anderweitig signalisiert werden kann. So könnte bei dem erfindungsgemäßen Notlichtgerät beispielsweise auch über einen separaten Steuereingang ein Notsignal z.B. von einem Feuermelder oder einer anderen Steuereinrichtung übermittelt werden, um durch ein externes Signal einen Notlichtbetrieb zu veranlassen.

Eine andere Weiterbildung schließlich betrifft die zuvor erwähnten und in der Steuereinheit hinterlegten Wertetabellen, welche zur indirekten Bestimmung der Eingangsspannung und des Dioden-Stroms erforderlich sind. Wie bereits erwähnt wurde, können diese Wertetabellen bereits bei der Herstellung des Notlichtgeräts in der Steuereinheit gespeichert werden. Alternativ oder ergänzend hierzu wäre es allerdings auch denkbar, diese Informationen nachträglich einzuschreiben bzw. zu einem späteren Zeitpunkt zu aktualisieren. Hierfür könnte z.B. ein in dem Notlichtgerät vorgesehenes digitales Interface genutzt werden, welches üblicherweise zur Fehlersignalisierung und Überwachung genutzt wird. Mit Hilfe dieses Interfaces könnten nunmehr unter Nutzung eines erweiterten Befehlssatzes neue Wertetabellen in die Steuereinheit eingeschrieben werden. Dieses nachträgliche Einschreiben neuer Informationen ist beispielsweise sinnvoll, um neue Soll- bzw. Tolleranzwerte für die Eingangsspannung vorzugeben oder auch die Informationen zur Ermittlung der nicht direkt gemessenen Größen an die angeschlossene Batterie anzupassen. Hierdurch kann also das Notlichtgerät hinsichtlich seines Verhaltens jederzeit an neue Umstände angepasst werden.

Insgesamt gesehen wird somit durch die vorliegende Erfindung ein neuartiges Notlichtgerät bereitgestellt, welches sich durch seinen einfachen und kostengünstig zu realisierenden Aufbau auszeichnet und trotz allem in zuverlässiger Weise die Feststellung eines Notfalles durch Überwachung der allgemeinen Netzversorgung ermöglicht. Darüber hinaus ist durch die vorteilhafte Regelung des Diodenstroms eine konstante Lichtabgabe über die Dauer eines Notbetriebs hinweg sichergestellt.

**Patentansprüche**

1. Notlichtgerät (1) zum Betreiben einer Lichtquelle, insbesondere einer LED, wobei das Notlichtgerät (1) aufweist:

   • eine Energiespeichereinheit (4),
   • eine mit einer Netzversorgungsspannung ($U_{in}$) zu versorgende Ladeschaltung (3) zum Laden der Energiespeichereinheit (4) während eines Ladebetriebs, wobei die Ladeschaltung (3) eine Potentialtrennung aufweist, sowie
   • eine während eines Notlichtbetriebs durch die Energiespeichereinheit (4) versorgte Treiberschaltung (5) zum Betreiben der Lichtquelle,

wobei das notlichtgerät (1) ferner eine Steuereinheit (2) aufweist, welche dazu ausgebildet ist, den Zustand der Netzversorgungsspannung ($U_{in}$) während des Ladebetriebs zu überwachen und bei Erkennen eines Notzustands den Notlichtbetrieb zu aktivieren, **dadurch gekennzeichnet,** dass die Steuereinheit (2) den Zustand der Netzversorgungsspannung ($U_{in}$) anhand einer Ausgangsspannung der Ladeschaltung (3) ermittelt, welche Ausgangsspannung die Energiespeichereinheit (4) lädt, und

**dass** die Ladeschaltung (3) einen steuerbaren Schalter (S1) aufweist, welcher durch die Steuereinheit (2) angesteuert wird, wobei die Ausgangsspannung insbesondere von einem Wicklungsverhältnis von Wicklungen der Ladeschaltung (3), die durch einen Flyback-Konverter gebildet ist und die einen Transformator (T) mit einer Primärwicklung (n1) und einer Sekundärwicklung (n2) aufweist, und von einem Duty-Cycle des Schalters (S1) abhängig ist, und wobei in der Steuereinheit (2) eine Wertetabelle hinterlegt ist, aus der anhand zumindest der ermittelten Ausgangsspannung der

Ladeschaltung (3) die Netzversorgungsspannung ($U_{in}$) ermittelt wird.

2. Notlichtgerät nach Anspruch 1, **dadurch gekennzeichnet,** **dass** die Ansteuerung des Schalters (S1) über einen Optokoppler (6) erfolgt.

3. Notlichtgerät nach einem der Ansprüche 1 oder 2, **dadurch gekennzeichnet,** **dass** die Steuereinheit (2) die Netzversorgungsspannung ($U_{in}$) durch Vergleich bekannter bzw. gemessener Betriebsgrößen des Notlichtgeräts mit der oder einer weiteren in der Steuereinheit (2) hinterlegten Wertetabelle bestimmt.

4. Notlichtgerät nach einem der vorherigen Ansprüche, **dadurch gekennzeichnet,** **dass** die Treiberschaltung (5) als Schaltregler ausgebildet ist und einen durch die Steuereinheit (2) angesteuerten steuerbaren Schalter (S2) aufweist.

5. Notlichtgerät nach Anspruch 4, **dadurch gekennzeichnet,** **dass** die Steuereinheit (2) die Treiberschaltung (5) derart ansteuert, dass die Lichtquelle unabhängig vom Ladezustand der Energiespeichereinheit (4) durch eine Taktung des steuerbaren Schalters (S2) der Treiberschaltung (5) mit einer konstanten Leistung ($P_{led}$) oder konstantem Strom ($I_{1ed}$) geregelt wird.

6. Notlichtgerät nach Anspruch 5, **dadurch gekennzeichnet,** **dass** die Steuereinheit (2) die Höhe eines der Lichtquelle zugeführten Stroms ($I_{led}$) indirekt ermittelt.

7. Notlichtgerät nach Anspruch 6, **dadurch gekennzeichnet,** **dass** die Steuereinheit (2) die Höhe des der Lichtquelle zugeführten Stroms ($I_{led}$) anhand der an der Lichtquelle anliegenden Spannung ($U_{led}$) berechnet.

8. Notlichtgerät nach Anspruch 7, **dadurch gekennzeichnet,** **dass** die Steuereinheit (2) bei der Berechnung des der Lichtquelle zugeführten Stroms ($I_{led}$) eine Verlustleistung ($P_{lost}$) der Treiberschaltung (5) berücksichtigt.

9. Notlichtgerät nach Anspruch 8, **dadurch gekennzeichnet,** **dass** eine Ermittlung der Verlustleistung ($P_{lost}$) der Treiberschaltung (5) durch Vergleich gemessener Betriebsgrößen des Notlichtgeräts (1) mit einem Wert der oder einer weiteren in der Steuereinheit (2) hinterlegten Wertetabelle erfolgt.

10. Notlichtgerät nach Anspruch 8 oder 9, **dadurch gekennzeichnet,** **dass** die Steuereinheit (2) bei der Berechnung des der Lichtquelle zugeführten Stroms ($I_{led}$) ferner eine Sekundärleistung ($P_{f1b2}$) der Ladeschaltung (3) für die Energiespeichereinheit (4) berücksichtigt.

11. Notlichtgerät nach Anspruch 10, **dadurch gekennzeichnet,** **dass** eine Ermittlung der Sekundärleistung ($P_{f1b2}$) der Ladeschaltung (3) durch Vergleich gemessener Betriebsgrößen des Notlichtgeräts (1) mit einem Wert einer weiteren in der Steuereinheit (2) hinterlegten Wertetabelle erfolgt.

12. Notlichtgerät nach einem der Ansprüche 3, 9 oder 11, **dadurch gekennzeichnet,** **dass** dieses ein Interface zum Empfangen externer Informationen zur Programmierung und/oder Aktualisierung der in der Steuereinheit (2) hinterlegten Wertetabelle/Wertetabellen aufweist.

## Claims

1. Emergency lighting device (1) for operating a light source, in particular an LED, the emergency lighting device (1) having:

   • an energy storage unit (4),
   • a charge circuit (3) to be supplied with a system supply voltage ($U_{in}$) for charging the energy storage unit (4) during a charging operating mode, the charge circuit (3) having electrical isolation, and

• a driver circuit (5) supplied by the energy storage unit (4) during an emergency lighting operating mode for operating the light source,

wherein the emergency lighting device (1) also has a control unit (2), which is designed to monitor the state of the system supply voltage ($U_{in}$) during the charging operating mode and to activate the emergency lighting operating mode in the event of identification of an emergency state, **characterized in that** the control unit (2) determines the state of the system supply voltage ($U_{in}$) on the basis of an output voltage of the charge circuit (3), which output voltage charges the energy storage unit (4), and **in that** the charge circuit (3) has a controllable switch (S1), which is actuated by the control unit (2), the output voltage being dependent on a turns ratio of windings in the charge circuit (3), which is formed by a flyback converter and has a transformer (T) with a primary winding (n1) and a secondary winding (n2), and on a duty cycle of the switch (S1), and a value table being stored in the control unit (2), from which value table the system supply voltage ($U_{in}$) is determined on the basis of at least the determined output voltage of the charge circuit (3).

2. Emergency lighting device according to Claim 1, **characterized in that** the actuation of the switch (S1) is performed via an optocoupler (6).

3. Emergency lighting device according to either of Claims 1 and 2, **characterized in that** a control unit (2) determines the system supply voltage ($U_{in}$) by comparison of known or measured operational variables of the emergency lighting device with the or a further value table stored in the control unit (2).

4. Emergency lighting device according to one of the preceding claims, **characterized in that** the driver circuit (5) is in the form of a switched-mode regulator and has a controllable switch (S2) actuated by the control unit (2).

5. Emergency lighting device according to Claim 4, **characterized in that** the control unit (2) actuates the driver circuit (5) in such a way that the light source is regulated independently of the state of charge of the energy storage unit (4) by clocking of the controllable switch (S2) of the driver circuit (5) with a constant power ($P_{led}$) or a constant current ($I_{led}$).

6. Emergency lighting device according to Claim 5, **characterized in that** the control unit (2) determines the level of a current ($I_{led}$) supplied to the light source indirectly.

7. Emergency lighting device according to Claim 6, **characterized in that** the control unit (2) calculates the level of the current ($I_{led}$) supplied to the light source on the basis of the voltage ($U_{led}$) present at the light source.

8. Emergency lighting device according to Claim 7, **characterized in that** the control unit (2) takes into consideration a power loss ($P_{lost}$) of the driver circuit (5) in the calculation of the current ($I_{led}$) supplied to the light source.

9. Emergency lighting device according to Claim 8, **characterized in that** a determination of the power loss ($P_{lost}$) of the driver circuit (5) is performed by comparison of measured operational variables of the emergency lighting device (1) with a value of the or a further value table stored in the control unit (2).

10. Emergency lighting device according to Claim 8 or 9, **characterized in that** the control unit (2) further takes into consideration a secondary power ($P_{f1b2}$) of the charge circuit (3) for the energy storage unit (4) in the calculation of the current ($I_{led}$) supplied to the light source.

11. Emergency lighting device according to Claim 10, **characterized in that** a determination of the secondary power ($P_{f1b2}$) of the charge circuit (3) is performed by comparison of measured operational variables of the emergency lighting device (1) with a value of a further value table stored in the control unit (2).

12. Emergency light device according to one of Claims 3, 9 and 11, **characterized in that** said emergency lighting device has an interface for receiving external information items for programming and/or updating the value table(s) stored in the control unit (2).

**Revendications**

1. Appareil d'éclairage de secours (1) pour faire fonctionner une source de lumière, en particulier une LED, l'appareil d'éclairage de secours (1) présentant :

   - une unité de stockage d'énergie (4),
   - un circuit de charge (3), qui est conçu pour être alimenté par une tension d'alimentation de réseau (Uin), pour charger l'unité de stockage d'énergie (4) pendant une opération de charge, le circuit de charge (3) présentant une isolation électrique, ainsi que
   - un circuit d'attaque (5), qui est alimenté par l'unité de stockage d'énergie (4) pendant une opération d'éclairage de secours, pour faire fonctionner la source de lumière, l'appareil d'éclairage de secours (1) présentant en outre une unité de commande (2), laquelle est configurée de manière à contrôler l'état de la tension d'alimentation de réseau (Uin) pendant l'opération de charge et à activer l'opération d'éclairage de secours en cas de détection d'un état de secours,

**caractérisé en ce que**
l'unité de commande (2) détermine l'état de la tension d'alimentation de réseau (Uin) sur la base d'une tension de sortie du circuit de charge (3), laquelle tension de sortie charge l'unité de stockage d'énergie (4), et
**en ce que** le circuit de charge (3) présente un commutateur (S1) commandable, lequel est commandé par l'unité de commande (2), la tension de sortie étant dépendante en particulier d'un rapport d'enroulements d'enroulements du circuit de charge (3), qui est formé par un convertisseur Flyback et qui présente un transformateur (T) avec un enroulement primaire (n1) et un enroulement secondaire (n2), et d'un rapport cyclique du commutateur (S1), et un tableau de valeurs étant stocké dans l'unité de commande (2), à partir duquel la tension d'alimentation de réseau (Uin) est déterminée sur la base d'au moins la tension de sortie déterminée du circuit de charge (3).

2. Appareil d'éclairage de secours selon la revendication 1, **caractérisé en ce que**
la commande du commutateur (S1) est effectuée via un octocoupleur (6).

3. Appareil d'éclairage de secours selon l'une des revendications 1 ou 2,
**caractérisé en ce que**
l'unité de commande (2) détermine la tension d'alimentation de réseau (Uin) par comparaison de variables de fonctionnement connues ou mesurées de l'appareil d'éclairage de secours avec le tableau de valeurs ou un autre tableau de valeurs stocké dans l'unité de commande (2).

4. Appareil d'éclairage de secours selon l'une des revendications précédentes,
**caractérisé en ce que**
le circuit d'attaque (5) est configuré comme régulateur à découpage et présente un commutateur (S2) commandable commandé par l'unité de commande (2).

5. Appareil d'éclairage de secours selon la revendication 4, **caractérisé en ce que**
l'unité de commande (2) commande le circuit d'attaque (5) de telle manière que la source de lumière est réglée indépendamment de l'état de charge de l'unité de stockage d'énergie (4) par un cadencement du commutateur (S2) commandable du circuit d'attaque (5) avec une puissance (Pled) constante ou un courant (Iled) constant.

6. Appareil d'éclairage de secours selon la revendication 5, **caractérisé en ce que**
l'unité de commande (2) détermine de manière indirecte la valeur d'un courant (Iled) fourni à la source de lumière.

7. Appareil d'éclairage de secours selon la revendication 6, **caractérisé en ce que**
l'unité de commande (2) calcule la valeur du courant (Iled) fourni à la source de lumière à partir de la tension (Uled) aux bornes de la source de lumière.

8. Appareil d'éclairage de secours selon la revendication 7, **caractérisé en ce que**
l'unité de commande (2) prend en compte une puissance dissipée (Plost) du circuit d'attaque (5) lors du calcul du courant (Iled) fourni à la source de lumière.

9. Appareil d'éclairage de secours selon la revendication 8, **caractérisé en ce que**
une détermination de la puissance dissipée (Plost) du circuit d'attaque (5) est effectuée par comparaison de variables de fonctionnement mesurées de l'appareil d'éclairage de secours (1) avec une valeur du tableau de valeurs ou d'un autre tableau de valeurs stocké dans l'unité de commande (2).

10. Appareil d'éclairage de secours selon la revendication 8 ou 9,
**caractérisé en ce que**
lors du calcul du courant (Iled) fourni à la source de lumière l'unité de commande (2) prend en compte en outre une puissance secondaire (Pflb2) du circuit de charge (3) pour l'unité de stockage d'énergie (4).

11. Appareil d'éclairage de secours selon la revendication 10, **caractérisé en ce que**
une détermination de la puissance secondaire (Pflb2) du circuit de charge (3) est effectuée par comparaison de valeurs de fonctionnement mesurées de l'appareil d'éclairage de secours (1) avec une valeur d'un autre tableau de valeurs stocké dans l'unité de commande (2).

12. Appareil d'éclairage de secours selon l'une des revendications 3, 9 ou 11,
**caractérisé en ce que**
celui-ci présente une interface pour recevoir des informations externes pour la programmation et/ou l'actualisation du/des tableau(x) de valeurs stocké(s) dans l'unité de commande (2).

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- US 6502044 B1
- US 20060001381 A1
- US 7015654 B1

**In der Beschreibung aufgeführte Nicht-Patentliteratur**

- *Critical-Mode Control Stabilizes Switch-Mode Power Supplies,* 23. April 1998, 171
- Evaluation of a low-cost permanent emergency lighting system based on high efficiency LEDs. *38th IEEE Industry Applications Conference, conference record of the IEEE Industry Applications Conference IAS annual meeting,* 12. Oktober 2003